# EUROPÄISCHE PATENTSCHRIFT

(11) **EP 0 936 403 B1**
(45) Veröffentlichungstag und Bekanntmachung des Hinweises auf die Patenterteilung: **17.05.2006**
(21) Anmeldenummer: 99102971.1
(22) Anmeldetag: 15.02.1999
(51) Int. Cl.: F21V 7/00, F21S 8/10

(54) **Beleuchtungseinrichtung für Kraftfahrzeuge**
Light assembly for motor vehicles
Dispositif d'éclairage pour des véhicules automobiles.

(30) Priorität: 17.02.1998 DE 19806526
(43) Veröffentlichungstag der Anmeldung: 18.08.1999
(73) Patentinhaber: Hella KGaA Hueck & Co., 59552 Lippstadt (DE)
(72) Erfinder: Diehl, Constantin, 59555 Lippstadt (DE); Dünschede, Elmar, 33102 Paderborn (DE); Gödecker, Reiner, 59558 Lippstadt (DE); Sprenger, Winfried, 59555 Lippstadt (DE)

(56) Entgegenhaltungen:
- DE-A- 3 123 369
- US-A- 5 434 754

## Beschreibung

Die Erfindung betrifft eine Beleuchtungseinrichtung für Kraftfahrzeuge, insbesondere für eine Signalleuchte, mit einem langgestreckten Lichtleiter, der eine sich quer zur Längsrichtung erstreckende Lichteinkoppelfläche aufweist und der in Längsrichtung eine quer zur Längsrichtung abstrahlende Lichtaustrittsfläche aufweist, wobei der Lichtaustrittsfläche gegenüberliegend eine Reflexionsfläche zugeordnet ist, die in Richtung auf das von der Lichteinkoppelfläche abgewandte Ende des Lichtleiters stufenförmig zu der Lichtaustrittsfläche hin ansteigt mit einer Anzahl von in Längsrichtung verlaufenden ersten Abschnitten und mit einer Anzahl von in einem Winkel zur Längsrichtung verlaufenden, zu den ersten Abschnitten benachbarten zweiten Abschnitten.

Langgestreckte Lichtleiter, deren Reflexionsflächen sich stufenförmig in Längsrichtung des Lichtleiters erstrecken, werden in Kraftfahrzeugen für eine Vielzahl von Anwendungen eingesetzt. Aus der DE 30 47 816 C2 ist beispielsweise eine Beleuchtungseinrichtung als Scheinwerfer ausgebildet, wobei die aus der Lichtaustrittsfläche des Lichtleiters austretenden Lichtstrahlen an in einem Winkel zur Längsrichtung verlaufenden Abschnitten des Lichtleiters reflektiert werden. Aus der gattungsgemäßen DE 31 23 369 C2 ist ein Lichtleiter bekannt, der zur Beleuchtung einer Anzeigeeinrichtung dient. Dieser umfaßt ebenfalls stufenförmig ausgebildete Abschnitte der Reflexionsfläche, an denen die in den Lichtleiter eingeleiteten Lichtstrahlen in Richtung der Lichtaustrittsfläche reflektiert werden.

Aus der DE 35 26 511 C2 ist eine Beleuchtungseinrichtung mit einem langgestreckten Lichtleiter bekannt, der eine stufenförmige ansteigende Reflexionsfläche zur gleichmäßigen Ausleuchtung der Lichtaustrittsfläche des Lichtleiters aufweist. Dabei erstreckt sich die Lichtaustrittsfläche in Längsrichtung des Lichtleiters und ist gegenüberliegend zu der Reflexionsfläche desselben angeordnet. Nachteilig an den bekannten Lichtleitern ist, daß die in einem dem zweiten Abschnitt nahen Bereich des ersten Abschnitts totalreflektierten Lichtstrahlen nachfolgend an dem zweiten Abschnitt in eine ungewünschte Richtung zur Lichtaustrittsfläche reflektiert werden können. Diese Lichtstrahlen verlassen die Lichtaustrittsfläche in einem undefinierten Winkelbereich.

Aufgabe der vorliegenden Erfindung ist es daher, eine Beleuchtungseinrichtung für Kraftfahrzeuge zu schaffen, wobei die Intensität des unter einem vorgegebenen Winkel abgestrahlten Lichtbündels erhöht wird und eine gleichmäßige Abstrahlung des Lichtbündels über die Länge des Lichtleiters erfolgt.

Die Aufgabe wird erfindungsgemäß dadurch gelöst, daß ein der Lichteinkoppelfläche zugewandtes Ende des zweiten Abschnitts als quer zur Längsrichtung abragende Ausbuchtung ausgebildet ist.

Durch die erfindungsgemäße Ausbuchtung in einen Bereich zwischen dem zweiten Abschnitt und einem der Lichteinkoppelfläche zugewandten benachbarten ersten Abschnitt der Reflexionsfläche wird eine Erhöhung der Intensität des Lichtbündels in einem vorgegebenen Austrittswinkelbereich des Lichtleiters ermöglicht. Grundgedanke der Erfindung ist es, die wirksame Reflexionsfläche des zweiten Abschnitts derart quer zur Längsrichtung des Lichtleiters nach außen zu positionieren, daß die in einem der Lichteinkoppelfläche abgewandten und zugleich dem zweiten Abschnitt nahen Bereich des ersten Abschnitts reflektierten Lichtstrahlen ungehindert zu der gegenüberliegenden Lichtaustrittsfläche weitergeleitet werden können, an der sie weiter reflektiert werden. Der zweite Abschnitt dient ausschließlich dazu, die Lichtstrahlen unter einer vorgegebenen Abstrahlrichtung zu reflektieren.

Nach einer bevorzugten Ausführungsform der Erfindung ist der zweite Abschnitt als Schrägfläche ausgebildet, die einen vorgegebenen konstanten Winkel zu einer Längsmittelebene des Lichtleiters bildet. Auf einfache Weise wird durch Parallelverschiebung der Schrägfläche quer zur Längsrichtung ein Lichtleiter geschaffen, der bei gleicher Abstrahlrichtung eine verbesserte Abstrahlcharakteristik aufweist.

Nach einer Ausgestaltung der Erfindung ist der Lichtleiter stabförmig ausgebildet und weist eine quer zur Längsrichtung bogenförmig ausgebildete Lichtaustrittsfläche auf. Dabei ist die Lichtaustrittsfläche im wesentlichen halbzylindrisch ausgebildet, wobei zumindest die ersten und zweiten Abschnitte der Reflexionsfläche eben ausgebildet sind. Hierdurch wird eine gleichmäßige Ausleuchtung in einem vorgegebenen Winkelbereich ermöglicht.

Weitere Einzelheiten der Erfindung ergeben sich aus der nachfolgenden ausführlichen Beschreibung und den beigefügten Zeichnungen, in denen bevorzugte Ausführungsformen der Erfindung beispielweise veranschaulicht sind.

In den Zeichnungen zeigen:
- Figur 1:: eine Seitenansicht einer Beleuchtungseinrichtung,
- Figur 2:: einen Querschnitt der Beleuchtungseinrichtung entlang der Linie II-II in Figur 1,
- Figur 3:: eine vergrößerte Teilansicht X aus Figur 1 und
- Figur 4:: eine vergrößerte Teilansicht X aus Figur 1 nach einem alternativen Ausführungsbeispiel.

Die im folgenden beschriebene Beleuchtungseinrichtung ist Teil einer Signalleuchte für Kraftfahrzeuge, die als zusätzliche hochgestellte Bremsleuchte oberhalb eines endseitigen Heckbereichs des Kraftfahrzeugs angeordnet sein kann.

Die Beleuchtungseinrichtung besteht im wesentlichen aus einem stabförmigen Lichtleiter (1), der in einem nicht dargestellten Gehäuse gehalten ist. Der stabförmige Lichtleiter (1) weist an einem ersten Ende eine quer zu seiner Längsrichtung angeordnete großflächige Stirnfläche (2) auf, die als Lichteinkoppelfläche (3) ausgebildet ist. Die Lichteinkoppelfläche (3) kann eben oder leicht gewölbt ausgebildet sein. Koaxial zu dem Lichtleiter (1) ist eine Lichtquelle (4) im Bereich der Lichteinkoppelfläche (3) angeordnet, die vorzugsweise als Leuchtdiode (LED) ausgebildet ist.

Der stabförmige Lichtleiter (1) weist in Längsrichtung eine quer zu seiner Längsachse (5) abstrahlende Lichtaustrittsfläche (6) auf. Auf der der Lichtaustrittsfläche (6) gegenüberliegenden Seite des Lichtleiters (1) ist eine Reflexionsfläche (7) angeordnet. Während die Lichtaustrittsfläche (6) parallel zur Längsachse (5) verläuft, verringert sich der Abstand zwischen der Lichtaustrittsfläche (6) und der Reflexionsfläche (7) von der Stirnfläche (2) in Längsrichtung zu dem gegenüberliegenden Ende des Lichtleiters (1) stufenförmig. Die Reflexionsfläche (7) wird zum einen aus einem ersten Abschnitt (9) gebildet, der sich im wesentlichen parallel zur Längsachse (5) erstreckt. Zum zweiten umfaßt die Reflexionsfläche (7) einen in einem Winkel zur Längsachse (5) stehenden zweiten Abschnitt (10), der zusammen mit dem ersten Abschnitt (9) der Reflexionsfläche (7) eine stufenförmige Kontur verleiht. Der zweite Abschnitt (10) ist als ebene Schrägfläche (11) ausgebildet, die mit der Längsachse (5) einen stumpfen Winkel α bildet.

Die Schrägfläche (11) schließt sich an einem der Lichteinkoppelfläche.(3) zugewandten Ende des ersten Abschnitts (9) unmittelbar an. Dabei ist die Schrägfläche (11) derart ausgebildet, daß an einem der Lichteinkoppelfläche (3) zugewandten Ende eine Ausbuchtung (12) gebildet ist, deren Abstand zu der gegenüberliegenden Lichtaustrittsfläche (6) größer ist als der Abstand einer gedachten verlängerten Linie (13) des sich an der Ausbuchtung (12) unmittelbar anschließenden benachbarten ersten Abschnitt (9) zu der entsprechenden gegenüberliegenden Lichtaustrittsfläche (6). Die Ausbuchtung (12) wird zum einen gebildet aus der sich über die Linie (13) nach außen hin erstreckenden Schrägfläche (11) und zum anderen aus einem sich rechtwinklig von der Schrägfläche (11) anschließenden Distanzabschnitt (14), der in den benachbarten ersten Abschnitt (9) übergeht.

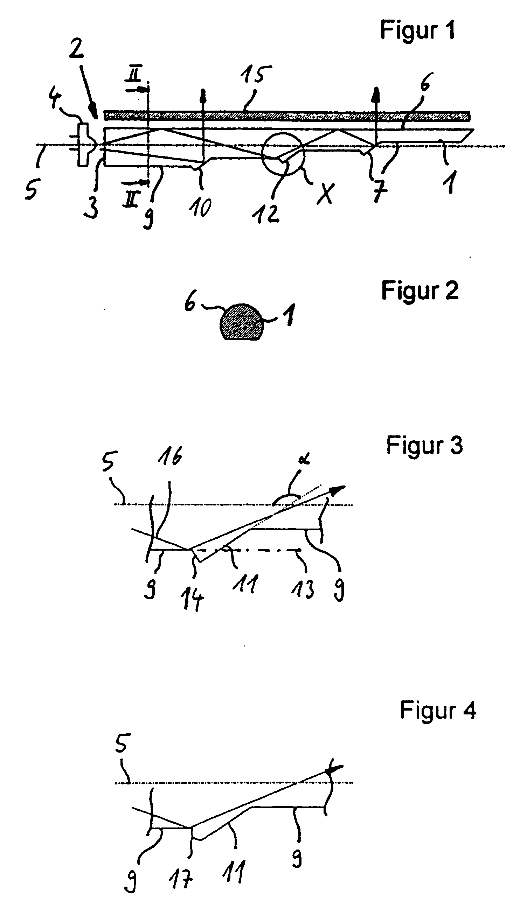

Wie aus Figur 1 in Verbindung mit Figur 3 zu ersehen ist, treten die von der Lichtquelle (4) ausgesandten Lichtstrahlen durch die Lichteinkoppelfläche (3) in den Lichtleiter (1) ein und werden an den Oberflächen des ersten Abschnitts (9) und der Lichtaustrittsfläche (6) infolge des flachen Verlaufs totalreflektiert. Aufgrund der geneigten Ausbildung der Schrägfläche (11) werden die auf die Schrägfläche (11) auftreffenden Lichtstrahlen derart in Richtung der Lichtaustrittsfläche (6) reflektiert, daß sie im wesentlichen quer zur Längsachse (5) aus derselben austreten und auf eine mit einer Vielzahl von Prismenelementen versehene Lichtscheibe (15) abstrahlen, die ein vorgegebenes Lichtbild bewirkt.

Durch das Vorsehen einer Ausbuchtung (12) können Lichtstrahlen (16), die in einem der Schrägfläche (11) nahen Bereich des der Lichteintrittsfläche (6) abgewandten Ende des ersten Abschnitts (9) reflektiert werden, ohne vorherige Reflexion an der Schrägfläche (11) zu der gegenüberliegenden Lichtaustrittsfläche (6) gelangen. An dieser werden sie wieder reflektiert, bis sie direkt auf eine Schrägfläche (11) treffen, die sie zielgerichtet in Richtung der Lichtaustrittsfläche (6) bzw. der Lichtscheibe (15) reflektiert. Eine Reflektion an der Schrägfläche (11) erfolgt daher in einem festgelegten und vorgegebenen Winkelbereich, so daß die Lichtintensität in dem vorgegebenen Abstrahlwinkelbereichs des Lichtleiters erhöht wird und darüber hinaus eine Abstrahlung in einem unerwünschten Winkelbereich des Lichtleiters infolge eines zu flachen Auftreffens der Lichtstrahlen auf die Schrägfläche (11) vermieden wird.

Der erste Abschnitt (9), der zweite Abschnitt (10) und der Distanzabschnitt (14) sind jeweils als plane Flächen ausgebildet, so daß der Lichtleiter (1) einen etwa kreisabschnittsförmigen Querschnitt aufweist.

In einem weiteren Ausführungsbeispiel der Erfindung gemäß Figur 4 kann der sich zwischen dem der Lichteinkoppelfläche (3) abgewandten Ende des ersten Abschnitts (9) und der Schrägfläche (11) erstreckende Distanzabschnitt auch als konvexförmiger Distanzabschnitt (17) ausgebildet sein. Die Form des Distanzabschnitts (17) kann auch weitere Formen aufweisen, die herstellungstechnische Vorteile bringen. Da aufgrund der Ausrichtung der Distanzabschnitte (14) bzw. (17) keine Totalreflektion der Lichtstrahlen an denselben auftritt, ist die Form der Distanzabschnitt von untergeordneter Bedeutung Wesentlich ist, daß sie sich in einem radialen Bereich außerhalb der verlängerten Linie (13) des benachbarten ersten Abschnitts (9) erstrecken.

## Patentansprüche

1. Beleuchtungseinrichtung für Kraftfahrzeuge, insbesondere für eine Signalleuchte, mit einem langgestreckten Lichtleiter (1), der eine sich quer zur Längsrichtung erstreckende Lichteinkoppelfläche (3) aufweist und der in Längsrichtung eine quer zur Längsrichtung abstrahlende Lichtaustrittsfläche (6) aufweist, wobei der Lichtaustrittsfläche (6) gegenüberliegend eine Reflexionsfläche (7) zugeordnet ist, die in Richtung auf das von der Lichteinkoppelfläche (3) abgewandte Ende des Lichtleiters (1) stufenförmig zu der Lichtaustrittsfläche (6) hin ansteigt mit einer Anzahl von in Längsrichtung verlaufenden ersten Abschnitten (9) und mit einer Anzahl von in einem Winkel zur Längsrichtung (1) verlaufenden, zu den ersten Abschnitten (9) benachbarten zweiten Abschnitten (10), **dadurch gekennzeichnet, daß** ein der Lichteinkoppelfläche (3) zugewandtes Ende des zweiten Abschnitts (10) als quer zur Längsrichtung abragende Ausbuchtung (12) ausgebildet ist.

2. Beleuchtungseinrichtung nach Anspruch 1, **dadurch gekennzeichnet, daß** der Abstand zwischen der Oberfläche der Ausbuchtung (12) und der gegenüberliegenden Lichtaustrittsfläche (6) größer ist als der Abstand zwischen einer gedachten verlängerten Linie (13) des benachbarten ersten Abschnitts (9) zu der entsprechenden gegenüberliegenden Lichtaustrittsfläche (6).

3. Beleuchtungseinrichtung nach Anspruch 1 oder 2, **dadurch gekennzeichnet, daß** die Ausbuchtung (12) aus einem der Lichteinkoppelfläche (3) zugewandten Teilbereich des zweiten Abschnitts (10) und einem sich demselben unmittelbar anschließenden, sich zum benachbarten Ende des ersten Abschnitts (9) erstreckenden Distanzabschnitt (14, 17) gebildet ist.

4. Beleuchtungseinrichtung nach einem der Ansprüche 1 bis 3, **dadurch gekennzeichnet, daß** der zweite Abschnitt (10) als eine die Lichtstrahlen zur Lichtaustrittsfläche (6) hin reflektierende Schrägfläche (11) ausgebildet ist.

5. Beleuchtungseinrichtung nach einem der Ansprüche 1 bis 4, **dadurch gekennzeichnet, daß** der Distanzabschnitt (14) rechtwinklig zu der Schrägfläche (11) angeordnet ist.

6. Beleuchtungseinrichtung nach einem der Ansprüche 1 bis 4, **dadurch gekennzeichnet, daß** der Distanzabschnitt (17) konvex- oder konkavförmig ausgebildet ist, wobei sich mindestens ein Ende des Distanzabschnitts (17) stetig an ein Ende der Schrägfläche (11) und/oder des ersten Abschnitts (9) anschließt.

7. Beleuchtungseinrichtung nach einem der Ansprüche 1 bis 6, **dadurch gekennzeichnet, daß** der Lichtleiter (1) stabförmig ausgebildet ist und daß sich die Lichtaustrittsfläche (6) quer zur Längsrichtung des Lichtleiters (1) bogenförmig erstreckt.

8. Beleuchtungseinrichtung nach einem der Ansprüche 1 bis 7, **dadurch gekennzeichnet, daß** die Schrägfläche (11) mit einer Längsachse (5) des Lichtleiters (1) einen stumpfen Winkel α bildet.

9. Beleuchtungseinrichtung nach einem der Ansprüche 1 bis 8, **dadurch gekennzeichnet, daß** die Ausbuchtung (12) eine solche Ausdehnung in Querrichtung des Lichtleiters (1) aufweist, daß Lichtstrahlen (16), die in einem dem zweiten Abschnitt (10) nahen Bereich des der Lichteinkoppelfläche (3) abgewandten Endes des ersten Abschnitts (9) reflektiert werden, erst an der gegenüberliegenden Lichtaustrittsfläche (6) als nächstes reflektiert werden.

10. Beleuchtungseinrichtung nach einem der Ansprüche 1 bis 9, **dadurch gekennzeichnet, daß** der erste Abschnitt (9) und der zweite Abschnitt (10) jeweils eben ausgebildet sind.

## Claims

1. Light assembly for motor vehicles, particularly for a signal light, with a long light guide (1), which has a light incoupling area (3) extending transversely to the longitudinal direction and has a light output area (6) radiating transversely to the longitudinal direction, in which a reflection area (7) is arranged opposite the light output area (6), which rises in steps in the direction of the end of the light guide (1) facing away from the light incoupling area (3) towards the light output area (6) with a number of first sections (9) running in the longitudinal direction and a number of second sections (10) adjacent to the first sections (9) running at an angle to the longitudinal direction (1), **characterised in that** an end of the second section (10) facing towards the light incoupling area (3) is made as a convexity (12) projecting transversely to the longitudinal direction.

2. Light assembly according to claim 1, **characterised in that** the distance between the surface of the convexity (12), and the light output area (6) opposite is greater than the distance between an imaginary extended line (13) of the adjacent first section (9) to the corresponding light output area (6) opposite.

3. Lighting assembly according to claim 1 or 2, **characterised in that** the convexity (12) is made out of a part area of the second section (10) facing towards the light incoupling area (3) and a distance section (14, 17) extending to the adjacent end of the first section (9) connecting directly with it.

4. Light assembly according to one of claims 1 to 3, **characterised in that** the second section (10) is made as a sloping area (11) reflecting the beams of light to the light output area (6).

5. Light assembly according to one of claims 1 to 4, **characterised in that** the distance section (14) is arranged at right angles to the sloping area (11).

6. Light assembly according to one of claims 1 to 4, **characterised in that** the distance section (17) is made convex or concave, in which at least one end of the distance section (17) is constantly connected to one end of the sloping area (11) and/or the first section (9).

7. Light assembly according to one of claims 1 to 6, **characterised in that** the light guide (1) is made in the shape of a rod and that the light output area (6) extends transversely to the longitudinal direction of the light guide (1) in the shape of an arch.

8. Light assembly according to one of claims 1 to 7, **characterised in that** the sloping area (11) forms an obtuse angle α with a longitudinal axis (5) of the light guide (1).

9. Light assembly according to one of claims 1 to 8, **characterised in that** the convexity (12) has such a extension in the transverse direction of the light guide (1) that beams of light (16) which are reflected in an area of the end of the first section (9) facing away from the light incoupling area (3) near the second section (10) only then are reflected to the light output area (6) opposite.

10. Light assembly according to one of claims 1 to 9, **characterised in that** the first section (9) and the second section (10) are both made level.

## Revendications

1. Système d'éclairage pour véhicules automobiles, en particulier pour un feu de signalisation, comportant un guide de lumière (1) allongé qui présente une surface de couplage de lumière (3) s'étendant transversalement à la direction longitudinale, et qui présente en direction longitudinale une surface de sortie de lumière (6) rayonnant transversalement à la direction longitudinale, et à l'opposé de la surface de sortie de lumière (6) est associée une surface de réflexion (7) qui, en direction de l'extrémité du guide de lumière (1) qui est détournée de la surface de couplage de lumière (3), monte par gradins vers la surface de sortie de lumière (6) avec un certain nombre de premiers tronçons (9) s'étendant en direction longitudinale et avec un certain nombre de deuxièmes tronçons (10) voisins des premiers tronçons (9) et s'étendant sous un angle par rapport à la direction longitudinale (1), **caractérisé en ce qu'**une extrémité du deuxième tronçon (10), qui est tournée vers la surface de couplage de lumière (3), est réalisée sous forme de relief (12) faisant saillie transversalement à la direction longitudinale.

2. Système d'éclairage selon la revendication 1, **caractérisé en ce que** la distance entre la surface du relief (12) et la surface de sortie de lumière (6) opposée est plus grande que la distance entre une ligne (13) de prolongation imaginaire du premier tronçon (9) voisin vers la surface de sortie de lumière (6) opposée correspondante.

3. Système d'éclairage selon la revendication 1 ou 2, **caractérisé en ce que** le relief (12) est formé à partir d'une région partielle tournée vers la surface de couplage de lumière (3), du deuxième tronçon (10) et d'un tronçon d'espacement (14, 17) se raccordant directement à celui-ci et s'étendant vers l'extrémité voisine du premier tronçon (9).

4. Système d'éclairage selon l'une des revendications 1 à 3, **caractérisé en ce que** le deuxième tronçon (10) est réalisé sous forme de surface oblique (11) réfléchissant les rayons lumineux vers la surface de sortie de lumière (6).

5. Système d'éclairage selon l'une des revendications 1 à 4, **caractérisé en ce que** le tronçon d'espacement (14) est agencé perpendiculairement à la surface oblique (11).

6. Système d'éclairage selon l'une des revendications 1 à 4, **caractérisé en ce que** le tronçon d'espacement (17) est réalisé de forme convexe ou concave, au moins une extrémité du tronçon d'espacement (17) se raccordant de manière continue à une extrémité de la surface oblique (11) et/ou du premier tronçon (9).

7. Système d'éclairage selon l'une des revendications 1 à 6, **caractérisé en ce que** le guide de lumière (1) est réalisé en forme de barre et **en ce que** la surface de sortie de lumière (6) s'étend en forme d'arc transversalement à la direction longitudinale du guide de lumière (1).

8. Système d'éclairage selon l'une des revendications 1 à 7, **caractérisé en ce que** la surface oblique (11) forme avec un axe longitudinal (5) du guide de lumière (1) un angle obtus α.

9. Système d'éclairage selon l'une des revendications 1 à 8, **caractérisé en ce que** le relief (12) présente une extension telle en direction transversale du guide de lumière (1) que des rayons lumineux (16) qui sont réfléchis dans une région proche du deuxième tronçon (10), de l'extrémité du premier tronçon (9), qui est détournée de la surface de couplage de lumière (3), sont les prochains à être réfléchis seulement sur la surface de sortie de lumière (6) opposée.

10. Système d'éclairage selon l'une des revendications 1 à 9, **caractérisé en ce que** le premier tronçon (9) et le deuxième tronçon (10) sont chacun réalisés plans.
